# EUROPEAN PATENT SPECIFICATION

(11) **EP 3 785 549 B1**
(45) Date of publication and mention of the grant of the patent: **27.11.2024**
(21) Application number: 19202148.3
(22) Date of filing: 09.10.2019
(51) Int. Cl.: A24D 3/02

(54) **AN APPARATUS AND METHOD FOR FORMING A SMOKE FILTER**
VORRICHTUNG UND VERFAHREN ZUR HERSTELLUNG EINES RAUCHFILTERS
APPAREIL ET PROCÉDÉ DE FORMATION D'UN FILTRE DE FUMÉE

(30) Priority: 28.08.2019 US 201916553529
(43) Date of publication of application: 03.03.2021
(73) Proprietor: Aiger Group AG, 6301 Zug (CH)
(72) Inventor: Yanchev, Dimitar, 4003 PLOVDIV (BG); Yanchev, Kaloyan, 4003 PLOVDIV (BG); Ikov, Ivan, 4003 PLOVDIV (BG)
(74) Representative: Glawe, Delfs, Moll

(56) References cited:
- EP-A1- 2 636 321
- EP-A1- 3 379 954
- EP-A2- 2 868 215
- EP-B1- 3 379 954
- US-A- 4 024 012
- US-B2- 9 392 819

## Description

### BACKGROUND

The production of smokers' goods in the tobacco industry, and in particular smoke filters, generally requires the manufacture of various rod-shaped articles. Apparatuses and methods for forming smoke filters through, for example, tow processing are known in the art but suffer from various drawbacks and inefficiencies. Thus, the disclosure described herein is for an improved apparatus, system and method for forming such smoke filters and the like.

Document EP 2 868 215 A2 relates to a device for producing a hollow and wrapping material-free filter strand of the tobacco-processing industry. A surface of a format channel of the format nozzle serving as a guide surface for the filter material flow is provided at least in sections with a non-stick coating.

From document EP 3 379 954 A1 an apparatus to manufacture hollow filters or hollow filter components is known, which are to be used in an aerosol-forming article. The apparatus is able to provide wrapped or non-wrapped filters having an internal through hole.

### SUMMARY

In one exemplary embodiment, an apparatus which may facilitate the forming of a smoke filter, which includes a converging forming nozzle through which a fibrous bundle material is conveyed by a working fluid, a guide pin located centrally to the forming nozzle over which the filter material passes, wherein the guide pin further comprises an excitation device, and a bobbin through which the fibrous bundle material passes as it is infused by the same or an working fluid. The guide pin is mechanically actuated or excited such to adjust the position or orientation of the guide pin throughout the process. The apparatus may also include additional heating or cooling sections for treatment of the fibrous bundle material that make use of the same or additional working fluids.

In another exemplary embodiment, a method by which a smoke filter may be formed, which includes passing a fibrous bundle material through a forming nozzle and over a guide pin, wherein the guide pin further comprises an excitation device, by way of a working fluid and passing the fibrous bundle material through a bobbin such that it is infused by the same or an additional working fluid. The method may also include manipulation of the guide pin and additional heating and cooling steps which may use the same or additional working fluids.

### BRIEF DESCRIPTION OF THE FIGURES

Advantages of embodiments of the present invention will be apparent from the following detailed description of the exemplary embodiments thereof, which description should be considered in conjunction with the accompanying drawings in which like numerals indicate like elements, in which:
FIG. 1 is an exemplary embodiment of an apparatus configured to facilitate the formation of a smoke filter.
FIG. 2A is an exemplary embodiment of a forming nozzle of an apparatus configured to facilitate the formation of a smoke filter.
FIG. 2B is an exemplary embodiment of a forming nozzle and guide pin of an apparatus configured to facilitate the formation of a smoke filter.
FIG. 2C is an exemplary embodiment of a bobbin of an apparatus configured to facilitate the formation of a smoke filter.
FIG. 2D is an exemplary embodiment of a cooling station of an apparatus configured to facilitate the formation of a smoke filter.
FIG. 3A is an exemplary embodiment of one possible configuration of the guide pin of an apparatus configured to facilitate the formation of a smoke filter.
FIG. 3B is another exemplary embodiment of one possible configuration of the guide pin of an apparatus configured to facilitate the formation of a smoke filter.
FIG. 3C is another exemplary embodiment of one possible configuration of the guide pin of an apparatus configured to facilitate the formation of a smoke filter.
FIG. 3D is another exemplary embodiment of one possible configuration of the guide pin of an apparatus configured to facilitate the formation of a smoke filter.
FIG. 3E is another exemplary embodiment of one possible configuration of the guide pin of an apparatus configured to facilitate the formation of a smoke filter.
FIG. 4 is an exemplary diagram of a method by which a smoke filter may be formed.

### DETAILED DESCRIPTION

Aspects of the invention are disclosed in the following description and related drawings directed to specific embodiments of the invention. Additionally, well-known elements of exemplary embodiments of the invention will not be described in detail or will be omitted so as not to obscure the relevant details of the invention. Further, to facilitate an understanding of the description discussion of several terms used herein follows.

As used herein, the word "exemplary" means "serving as an example, instance or illustration." The embodiments described herein are not limiting, but rather are exemplary only. It should be understood that the described embodiments are not necessarily to be construed as preferred or advantageous over other embodiments.

According to an exemplary embodiment, and referring generally to the Figures, various exemplary implementations of an apparatus and method for the formation of a smoke filter may be disclosed.

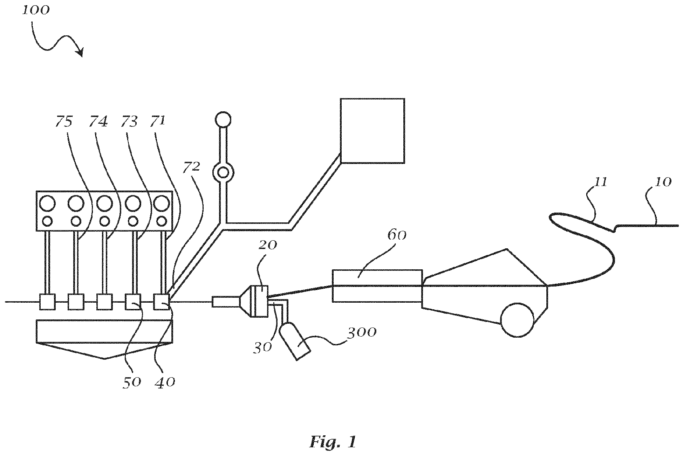

Turning to FIG. 1, there is provided an exemplary embodiment of an apparatus **100** configured to form a smoke filter. A filter material source **10** provides a fibrous bundle material **11** upon which the apparatus **100** acts. The fibrous bundle material **11** may consist of, for example, cellulose acetate or paper. The fibrous bundle material **11** may be supplied in various forms, passing into the apparatus **100,** for example, as a sheet, a cord, or a tube. The fibrous bundle material **11** is then conveyed through a forming nozzle **20** and over a guide pin **30.**

A forming nozzle **20** and guide pin **30** serve to convert the shape of the fibrous bundle material **11** into a desired shape or a desired intermediate shape prior to further processing. The converging passage **22** of the forming nozzle **20** is preferably shaped as a converging prism. The cross section of the converging passage **22** of the forming nozzle **20** may be, in on exemplary embodiment, cylindrical, however any suitable cross section may be used. The cross section of the converging passage **22** need not be symmetrical about any axis, and irregular or oblong shapes may be used to accommodate various formats of the fibrous bundle material or to accommodate the needs of any supporting elements of the guide pin. The rate of convergence of the converging passage **22** also need not be constant.

The forming nozzle **20** is further provided with at least one internal cavity **28** and a working surface **24.** The working surface **24** of the forming nozzle **20** may be defined as the surface by which the fibrous bundle material **11** proximately passes. While the working surface **24** may be coincident with an interior surface of the forming nozzle **20** or the surface of the converging passage **22,** the working surface **24** is not limited by these features. The working surface **24** is also provided with a plurality of holes **26** or perforations which create a fluid connection between the working surface **24** and the internal cavity **28** of the forming nozzle **20.** The internal cavity **28** of the forming nozzle **20** is also in fluid connection with a working fluid source **71.** Thus, a fluid circuit may be created which extends from the working fluid source **71** to the working surface **24.** A working fluid provided by the working fluid source may thus exit this fluid circuit at the plurality of holes **26.**

The plurality of holes **26** of the working surface **24** of the forming nozzle **20** may thus be positioned and directed such to create a propulsive force which conveys the fibrous bundle material **11** through the forming nozzle **20.** Thus, the direction in which the fibrous bundle material **11** is conveyed establishes a transport direction, which in another exemplary embodiment may also be described as a vector defined by the axis about which the converging passage **22** converges and the direction of convergence.

The working fluid provided by the working fluid source **71** may also, in coming into contact with the fibrous bundle material **11,** conduct a process upon the fibrous bundle material **11** such as heating, cooling, chemical reaction, or any combination thereof.

The guide pin **30** is an elongated body of variable cross section with a tapered tip **32.** The guide pin is disposed centrally with respect to the converging passage **22** and may be aligned with the transport direction of the fibrous bundle material **11** such that the tapered tip **32** points approximately in the transport direction. The disposition of the guide pin **30** with respect to the converging passage **22** need not be the geometric center of the converging passage, and, while preferable in some exemplary embodiments, may be specifically avoided in other exemplary embodiments. Precise alignment of the guide pin **30** and tapered tip **32** with the transport direction is also unnecessary and, while preferable in some exemplary embodiments, may be specifically avoided in other exemplary embodiments.

The tapered tip **32** of the guide pin **30** may be of arbitrary cross section and is not limited to a circular cross section. In some exemplary embodiments, a cross section in the shape of an X, a triangle, a star, a square, a toothed gear, a crescent, or any other number of arbitrary shapes may be preferable. The cross section may be a convex shape and does not need to be symmetrical across any plane. The cross section may also resolve into multiple, separate shapes as the tip tapers.

The guide pin **30** may be secured by either a static or a dynamic support **34.** In some preferred embodiments, this support may be also secured to the forming nozzle **20.** In other preferred embodiments, this support may be attached to a separate support structure. In instances where the guide pin **30** is secured to a dynamic support, the guide pin **30** may thus be manipulated during operation to alter its positioning relative to the forming nozzle **20.** By manipulating the guide pin **30** during operation of the apparatus **100,** a variety of internal shapes or structures may be created within the smoke filter product. In one exemplary embodiment, shifting the guide pin **30** axially with respect to the forming nozzle **20** may thus create voids and closures within the smoke filter product. In another exemplary embodiment, rotating the guide pin **30** about its central axis may create more intricate voids within the smoke filter product. Rotating the guide pin **30** about its central axis may also be used to reduce friction between the guide pin **30** and the fibrous bundle material **11.** In yet another exemplary embodiment, adjusting the alignment of the guide pin **30** relative to the transport direction may also allow finer control of the shaping of voids within the smoke filter product.

In one preferable embodiment, the guide pin **30** and/or the tapered tip **32** of the guide pin may be constructed from a firmly rigid material. In another preferable embodiment, the guide pin **30** and/or the tapered tip **32** of the guide pin may be constructed of a non-rigid material. When constructed of a non-rigid material, the guide pin **30** and/or tapered tip **32** may thus perform a self-centering function whereby the friction forces between the fibrous bundle material **11** and the guide pin **30** and/or tapered tip **32** cause the latter to deform such to more precisely align with the center of the fibrous bundle material **11** stream. As such, the non-rigid material is one preferably strong enough to maintain the desired cross-sectional shape but flexible enough to elastically deform with respect to these demands. While it may be preferable in one embodiment to restrict all deformations to the elastic regime of the material, in other embodiments it may be suitable or even preferable if the deformations occur in the plastic regime of the material.

A bobbin **40** is provided, which includes a passage **42** through which the fibrous bundle material **11** may be conveyed. The bobbin **40** further includes at least one internal cavity **44** that is in fluid connection with a working fluid source **72.** The passage **42** of the bobbin **40** is provided with a plurality of holes **46** which create a fluid connection with at least one internal cavity **44.** Thus, a fluid circuit is created which connects the working fluid source **72** with the passage **42** of the bobbin **40.** In this manner, a working fluid provided by the working fluid source **72** is brought into contact with the fibrous bundle material **11** in the passage **42** of the bobbin **40.**

The position and orientation of the plurality of holes **46** in the passage **42** of the bobbin **40** may, in one exemplary embodiment, be such that a propulsive force is applied to the fibrous bundle material **11** which serves to convey the fibrous bundle material **11** through the bobbin **40.** In another exemplary embodiment, the position and orientation of the plurality of holes **46** may also be such to further facilitate or enable a process conducted by a working fluid provided by working fluid source **72** upon the fibrous bundle material **11,** for example, heating, cooling, chemical reaction, or any combination thereof. In one advantageous embodiment, the working fluid provided by working fluid source **72** is steam, which may serve to cook the fibrous bundle material **11** as it passes through the passage **42.**

In another exemplary embodiment, at least one cooling station **50** may be provided downstream of the bobbin. Each cooling station is provided with a passage **52** through which the fibrous bundle material **11** may be conveyed and at least one internal cavity **54** in at least one fluid connection with a working fluid source **73-75.** In this manner, a working fluid provided by a working fluid source **73-75** may enter into the internal cavity **54.** In a preferred embodiment, the working fluid is provided to the internal cavity **52** of a cooling station **50** in order to provide convective cooling of the fibrous bundle material **11** as it passes through the passage **52** of the cooling station **50.** In such an embodiment, the internal cavity **54** may include at least a second fluid connection with the respective working fluid source **73-75** such that the working fluid provided by the working fluid source **73-75** may be recirculated through the cooling station.

In another exemplary embodiment, each cooling station may also operatively be provided with a plurality of holes **56** which create a fluid connection between the passage **52** and internal cavity **54** of the cooling station **50.** In this manner, a working fluid provided by the working fluid source **73-75** may be brought into contact with the fibrous bundle material **11.** The plurality of holes **56** may be positioned and oriented such that the working fluid thus provided creates a propulsive force to convey the fibrous bundle material **11** through the cooling station **50.** The plurality of holes **56** may also be positioned and oriented such that the working fluid thus provided may conduct a process upon the fibrous bundle material, for example, cooling, chemical reaction, or any combination thereof.

In another exemplary embodiment, at least one heating element **60** may be provided in proximity to the fibrous bundle material **11** stream. The heating element **60** may constitute an infrared heating device, a heating coil, or other similar device meant to heat the fibrous bundle material **11** as it passes in proximity to the heating element **60.** A heating element **60** may, in one exemplary embodiment, be advantageously disposed upstream of the forming nozzle **20.** A heating element **60** may, in another exemplary embodiment may be placed downstream of the forming nozzle **20** or bobbin **40.** In yet another exemplary embodiment, a heating element **60** may be placed upstream, downstream, or in between any number of cooling stations **50.**

A number of working fluid sources **71-75** are provided for the operation of the various components of the apparatus **100.** Additional working fluid sources may also be provided depending on the needs and number of their corresponding components. The working fluids provided by the working fluid sources **71-75** may range from ambient air, compressed air, water, and steam. The working fluids provided by the working fluid sources **71-75** may also be at a variety of temperatures as needed by the corresponding components. The working fluid sources **71-75** may thus, in one exemplary embodiment, be configured to provide individualized working fluids to each component of the apparatus **100.** In another exemplary embodiment, one or more working fluid source **71-75** may provide the same working fluid another working fluid source **71-75.** Additionally, one or more working fluid source **71-75** may be the same working fluid source, such as, in one exemplary embodiment, the same compressed air tank. For example, in one advantageous embodiment, working fluid source **71** may provide pressurized ambient air which may or may not be pre-heated, working fluid source **72** may provide steam, and working fluid sources **73-75** may provide pressurized ambient air from the same source which may or may not have been pre-cooled. In another advantageous embodiment, working fluid sources **71** and **72** may both provide steam. In another advantageous embodiment, working fluid sources **73-75** may provide pressurized air at different temperatures.

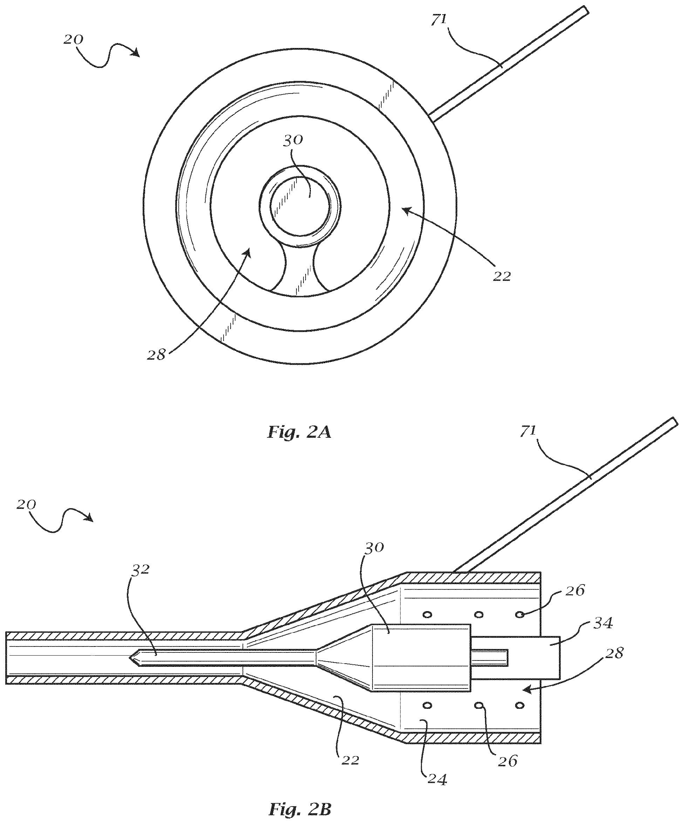

Turning to FIG. 2A and 2B, there is provided an exemplary embodiment of a forming nozzle **20,** the converging passage **22,** the working surface **24,** the plurality of holes **26,** and the internal cavity **28.** The end of the guide pin **30** opposite that of the tapered tip may also be seen as an exemplary embodiment of how a guide pin **30** may interface with the forming nozzle **20.**

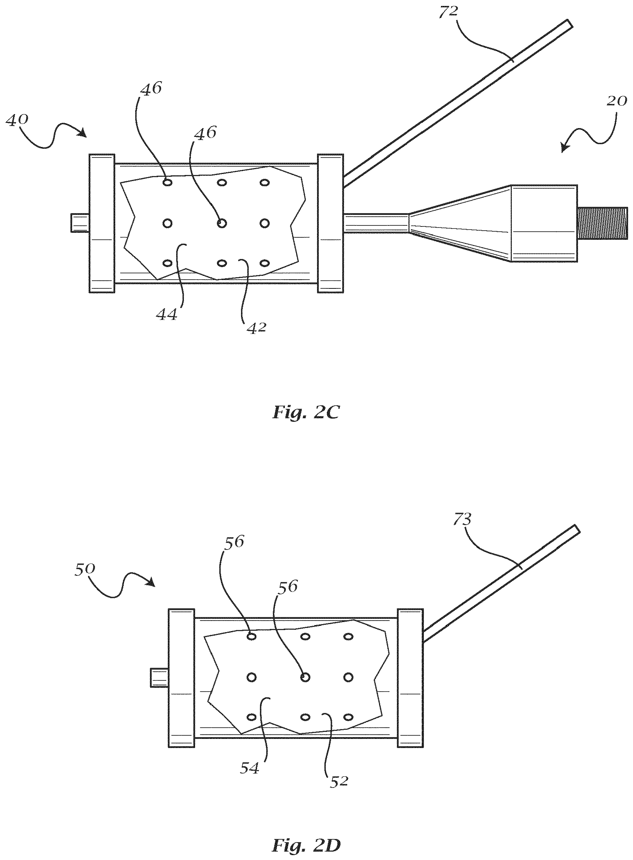

Turning to FIG. 2C, there is provided an exemplary embodiment of a bobbin **40,** as well as one configuration in which the guide pin **30** interfaces with the bobbin. Also shown is a passage **42,** internal cavity **44,** plurality of holes **46,** and a working fluid source **72.**

Turning to FIG. 2D, there is provided an exemplary embodiment of a cooling station **50,** a passage **52,** an internal cavity **54,** a plurality of holes **56,** and a working fluid source **73.**

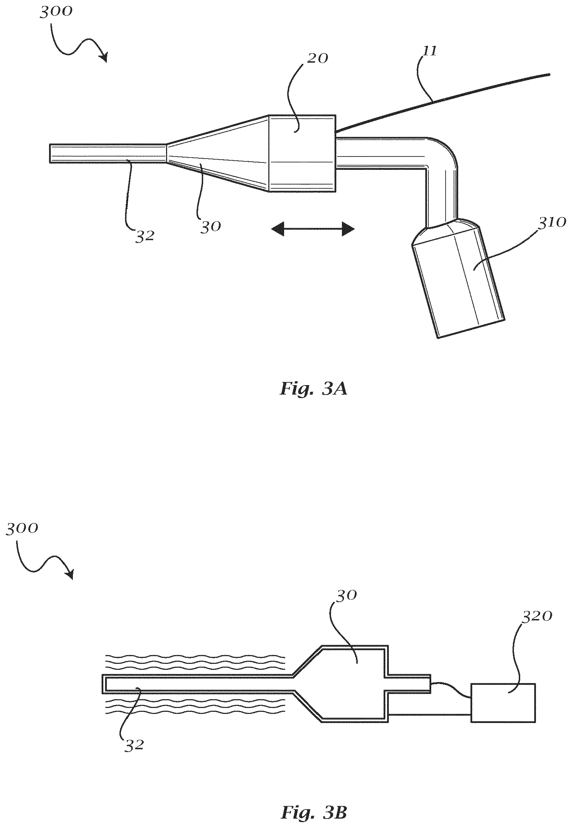

Turning to FIG. 3A, there is provided an exemplary embodiment of a dynamic support **300** for a guide pin **30.** In one advantageous embodiment, the dynamic support **300** consists of an armature **310** configured to translate the guide pin **30** axially with reference to the forming nozzle **20.** By extending the guide pin **30** axially downstream, the fibrous bundle material **11** may thus flow past and over the tapered tip **32** of the guide pin such that the fibrous bundle material does not close into a solid shape as it flows through the forming nozzle **20,** creating a void in the middle of the finalized smoke filter product. By retracting the guide pin **30** axially upstream, the fibrous bundle material **11** may thus flow through the forming nozzle without coming into contact with the guide pin **30** such that the fibrous bundle material **11** closes as it passes through the forming nozzle **20,** creating a solid prism material in the finalized smoke filter product. In this manner, a periodic, axial oscillation or reciprocation of the guide pin **30** may serve to create repeated patterns of voids and solid sections in the finalized smoke filter product.

Turning to FIG. 3B, there is provided another exemplary embodiment of a dynamic support **300** for a guide pin **30.** In another advantageous embodiment, the dynamic support **300** consists of a vibration generator **320** which is linked to the guide pin **30** such that vibrations generated by the vibration generator **320** are transferred mechanically to the tapered tip **32.** Such vibrations may be configured to assist in the reduction of friction between the guide pin **30** and the fibrous bundle material **11** as the two come into contact. This reduction of friction may reduce wear on the guide pin **30,** as well as may serve to reduce the introduction of imperfections to the resulting smoke filter product. In one advantageous embodiment, the vibration generator is configured to provide vibrations at ultrasonic frequencies or frequencies higher than 10 kilohertz. In another exemplary embodiment, vibrations at frequencies of 10 kilohertz or lower may also be used to the same effect.

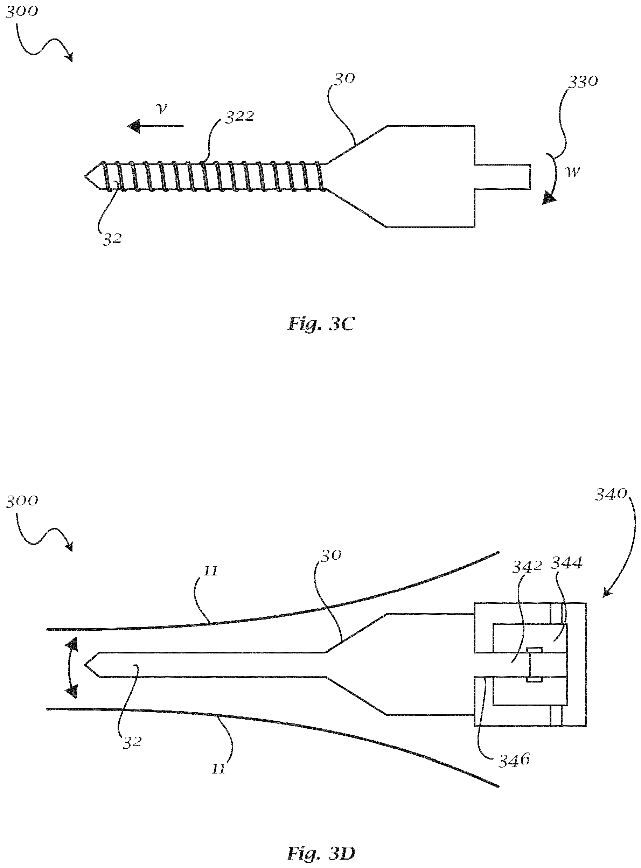

Turning to FIG. 3C, there is provided an exemplary embodiment of a dynamic support **300** for a guide pin **30.** In another advantageous embodiment, the dynamic support consists of a motor **330** used to rotate the guide pin about its long axis. This rotation, when coupled with certain cross-sectional shapes of the tapered tip **32,** may be used to introduce more intricately shaped voids within the finalized smoke filter product. The motor **320** thus provided may be a servomotor, a stepper motor, a brushless motor, a brushed motor, or similar electric motor as best suits the desired shapes. The rotation of the guide pin **30** may also serve to reduce friction between the guide pin **30** and fibrous bundle material **11.** This reduction in friction, as stated before, may serve to reduce wear on the guide pin **30** and reduce imperfections in the final product.

In another exemplary embodiment, the tapered tip **32** may also be further provided with a screw thread **322.** Such a screw thread **322** may be coarse, fine, or some measure in between. For some cross sections, the screw thread **322** may be provided solely to reduce friction between the tapered tip **32** and the fibrous bundle material **11.** For other cross sections, the screw thread **322** may be configured such that when considering the forward velocity of the fibrous bundle material **11** and any potential twist or rotation imposed on the same, a relative rotational velocity of zero may be maintained between the desired cross sectional void shape of the fibrous bundle material **11** and the cross sectional shape of the guide pin **30** and tapered tip **32.** In light of this, the screw thread **322** may also not be restricted to the conventional screw shape, but merely reflect a rotated cross section that, as a result, would appear screw-like.

Turning to FIG. 3D, there is provided another exemplary embodiment of a dynamic support **300** for a guide pin **30.** In another advantageous embodiment, the dynamic support **300** consists of a pneumatic alignment system **340.** In those instances where the guide pin **30** and/or tapered tip **32** are constructed of a rigid material, it may be preferable to allow some manner in which the tip may adjust to keep more precisely centered with the stream of fibrous bundle material **11** as that target fluctuates. To achieve this alignment, the upstream end of the guide pin **30** may further comprise a levered end **342** which protrudes into a pressure chamber **344.** The pressure chamber **344** is configured such that as the levered end **342** deflects with response to motion of the tapered tip **342,** the pressure chamber **344** may thus exert a force countering this deflection.

The pressure chamber **344** may be configured such that deflection of the levered end **342** causes a reduction of volume, and thus an increase in pressure and counter-acting force, of any number of individual, pressurized cells of the pressure chamber **344.** The pressure chamber **344** may also be configured such that deflection of the levered end **342** brings the levered end **342** closer to any number of compressed-air impingement jets, leading to a higher counter-acting force. The pressure chamber **344** may also be configured such that the deflection of the levered end **342** in turn restricts any number of air channels, leading to an increase in pressure in those channels and thus an increasing, counter-acting force.

Conversely, in another preferred embodiment, the pneumatic alignment system **340** may be replaced with a spring-based system which functions in a similar manner. In place of the pressure chamber **344,** the system is instead provided with a spring anchor and a number of springs attached to the levered end **342** of the guide pin **30.** As such, deflection of the levered end **342** leads to an extension or contraction of any number of springs, which in turn corresponds to a force which counters the deflection.

The pneumatic alignment system **340** or its spring-based alternative may be further provided with a fulcrum **346** disposed between the pressure chamber **344** or spring anchor and the tapered tip **32.**

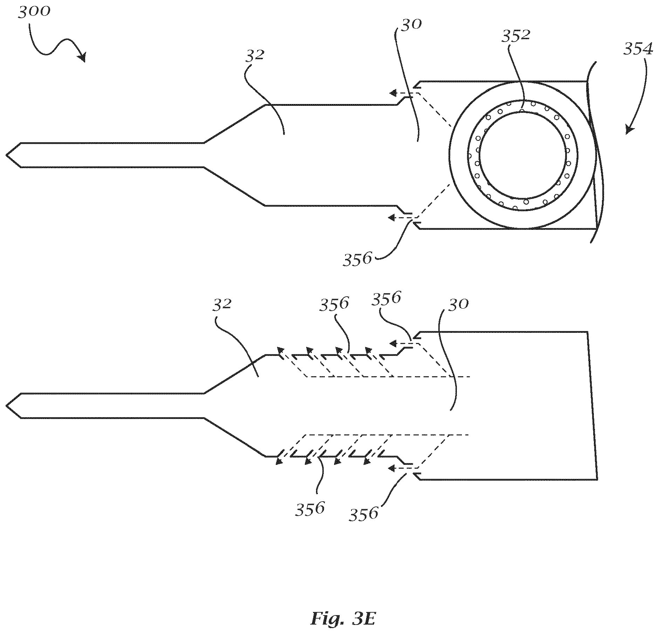

Turning to FIG. 3E, there is provided another exemplary embodiment of a dynamic support **300** for a guide pin **30.** In another advantageous embodiment, the dynamic support **300** consists of a fluid bearing **350.** The guide pin **30** may, in one exemplary embodiment, be further provided with an internal cavity **352** connected to a working fluid source **354.** The tapered tip **32** of the guide pin **30** may also be provided with a plurality of holes **356** which create a fluid connection between the internal cavity **352** and the external faces of the tapered tip **32,** thus creating a fluid circuit from the working fluid source **354** to the surface of the tapered tip **32.** In this manner, a working fluid may be ejected from the guide pin **30** such to impinge or infuse the fibrous bundle material **11** as it passes over the guide pin **30.** In doing so, several advantages may be achieved.

By using the working fluid as a buffer between the guide pin **30** and the fibrous bundle material **11,** friction between the two may be significantly reduced. This reduction of friction may thus reduce wear on the guide pin **30** as well as reduce imperfections in the final product. Additionally, the working fluid may also supplement processes worked by other stations, such as, but not limited to, the bobbin **40.** In one advantageous embodiment, steam may be provided as the working fluid by the working fluid source **354** and thus serve to cook the fibrous bundle material in addition to reducing friction as the fibrous bundle material **11** passes over the guide pin **30.** Other working fluids thus provided by the working fluid source **354** may include ambient air, or similar.

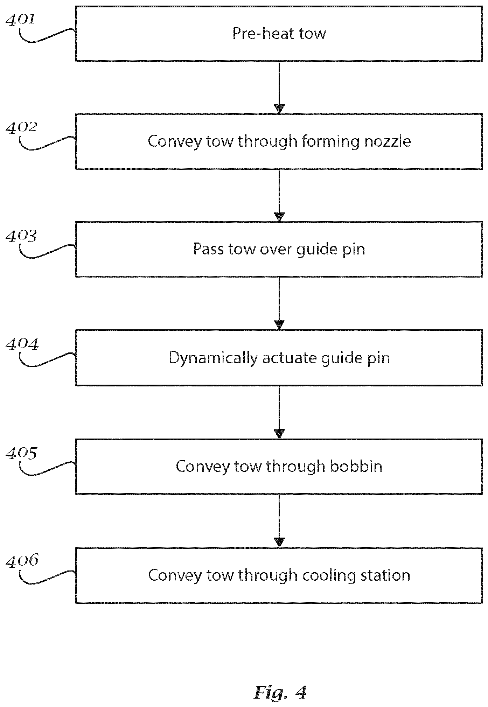

Turning to FIG 4, there is provided an exemplary embodiment of a method **400** for the formation of a smoke filter product. The fibrous bundle material **11,** or tow, may undergo an optional pre-heating step **401** in which the fibrous bundle material **11** is brought into proximity of a heating element **60.** The fibrous bundle material **11,** or tow, may then be passed through a forming nozzle **20** to undergo a first forming step **402.** Once formed, the fibrous bundle material **11** may then be passed over a guide pin **30** in a second forming step **403.** During this second forming step **403,** the guide pin may optionally be connected to a dynamic support **300** and dynamically actuated **404** to assist in the reduction of friction, to impart a desired shaping of the interior of the final smoke filter product, or both. The fibrous bundle material **11,** or tow, may then be conveyed through a bobbin **40** to undergo a cooking step **405** facilitated by a working fluid source **72.** Finally, the fibrous bundle material **11,** or tow, may be conveyed through a cooling station **50** to undergo a cooling step **406,** and this cooling step **406** may be repeated as many times as is necessary to reach a desired final temperature. Additionally, the pre-heating step **401** may occur at any point in the process prior to the cooking step **405.**

The foregoing description and accompanying figures illustrate the principles, preferred embodiments and modes of operation of the invention. However, the invention should not be construed as being limited to the particular embodiments discussed above. Additional variations of the embodiments discussed above will be appreciated by those skilled in the art (for example, features associated with certain configurations of the invention may instead be associated with any other configurations of the invention, as desired).

Therefore, the above-described embodiments should be regarded as illustrative rather than restrictive. Accordingly, it should be appreciated that variations to those embodiments can be made by those skilled in the art without departing from the scope of the invention as defined by the following claims.

## Claims

1. An apparatus for forming a smoke filter comprising:
a forming nozzle (20) through which a fibrous bundle material passes, the forming nozzle (20) comprising a converging passage (22), at least one first internal cavity (28) in fluid connection with a first working fluid source (71), and a plurality of first holes (26) fluidly connecting the at least one first internal cavity (28) with a working surface (24) of the forming nozzle (20), the plurality of first holes (26) further positioned and directed such that in passing through the plurality of first holes (26), the first working fluid conveys the fibrous bundle material through the forming nozzle (20) in a transport direction;
a guide pin (30) disposed along a central axis of the converging passage (22), the guide pin (30) comprising an elongated body which tapers in the transport direction, wherein the guide pin (30) further comprises an excitation device, wherein the excitation device preferably is a vibration generator linked vibrationally to the guide pin (30), wherein the excitation device further preferably is a motor non-rotationally connected to the guide pin (30), wherein the excitation device even further preferably is a pneumatic self-alignment system; and
a bobbin (40) disposed downstream of the forming nozzle (20), the bobbin (40) comprising a first passage (42) through which the fibrous bundle material is conveyed, at least one second internal cavity (44) in fluid connection with a second working fluid source (72), and a plurality of second holes (46) fluidly connecting the at least one second internal cavity (44) with the first passage (42), the plurality of second holes (46) positioned such that in passing through the plurality of second holes (46), the second working fluid infuses the fibrous bundle material.

2. The apparatus according to claim 1, in which the guide pin (30) is mounted to a translational device which displaces the guide pin (30) axially with respect to the forming nozzle (20).

3. The apparatus according to claim 1, in which the guide pin (30) further comprises a screw thread.

4. The apparatus according to claim 1, in which the guide pin (30) further comprises at least one third internal cavity (352) in fluid connection with a third working fluid source (354) and a plurality of third holes (356) fluidly connecting the at least one third internal cavity (352) and an exterior of the guide pin (30).

5. The apparatus according to claim 1, further comprising at least one heating element (60) disposed adjacent to a stream of fibrous bundle material.

6. The apparatus according to claim 1, further comprising at least one cooling station (50) disposed downstream of the bobbin (40), comprising a second passage (52) through which the fibrous bundle material is conveyed and at least one fourth internal passage (54) in at least one fluid connection with a fourth working fluid source (73-75) and through which the fourth working fluid is passed such to cool the fibrous bundle material.

7. The apparatus according to claim 7, wherein the at least one cooling station (50) further comprises a plurality of fourth holes (56) fluidly connecting the at least one fourth internal passage (54) and the second passage (52) such that the fourth working fluid impinges upon the fibrous bundle material.

8. The apparatus according to claim 1, in which the first working fluid and the second working fluid are the same.

9. The apparatus according to claim 4, in which at least one of the first working fluid, the second working fluid, and the third working fluid is the same as at least one of the first working fluid, the second working fluid, and the third working fluid.

10. The apparatus according to claim 7, in which at least one of the first working fluid, the second working fluid, and the fourth working fluid is the same as at least one of the first working fluid, the second working fluid, and the fourth working fluid.

11. A method for forming a smoke filter comprising:
flowing a first working fluid through an aspirated forming nozzle (20) such to convey a fiber bundle material through the forming nozzle (20) and over a guide pin (30) located centrally with respect to the forming nozzle (20), wherein the guide pin (30) further comprises an excitation device, wherein the excitation device preferably is a vibration generator linked vibrationally to the guide pin (30), wherein the excitation device further preferably is a motor non-rotationally connected to the guide pin (30), wherein the excitation device even further preferably is a pneumatic self-alignment system; and
flowing a second working fluid through an aspirated bobbin (40) such to infuse the fiber bundle material with the second working fluid as the fiber bundle material is conveyed through the bobbin (40).

12. The method according to claim 11, wherein the guide pin (30) is mechanically actuated such that the guide pin (30) is subject to at least one of:
a translational reciprocation along a first central axis of the forming nozzle (20);
a vibration;
a rotation about a second central axis of the guide pin (30);
an alignment with respect to the first central axis of the forming nozzle (20).

13. The method according to claim 11, wherein the guide pin (30) is aspirated such that a third working fluid is flowed through the guide pin (30) and into a path through which the fiber bundle material passes.

14. The method according to claim 11, further comprising flowing a fourth working fluid through at least one cooling station (50) such to cool the fiber bundle material as the fiber bundle material is conveyed through the cooling station (50).

15. The method according to claim 11, further comprising passing the fiber bundle material through a heating element (60).

## Patentansprüche

1. Vorrichtung zur Herstellung eines Rauchfilters, Folgendes umfassend:
eine Formdüse (20), durch welche ein faseriges Bündelmaterial verläuft, wobei die Formdüse (20) einen zusammenlaufenden Durchgang (22), mindestens einen ersten inneren Hohlraum (28), der mit einer ersten Arbeitsfluidquelle (71) in Fluidverbindung steht, und mehrere erste Bohrungen (26), welche den mindestens einen ersten inneren Hohlraum (28) mit einer Arbeitsfläche (24) der Formdüse (20) fluidisch verbinden, umfasst, wobei die mehreren ersten Bohrungen (26) ferner derart positioniert und ausgerichtet sind, dass beim Durchlaufen der mehreren ersten Bohrungen (26) das erste Arbeitsfluid das faserige Bündelmaterial in Transportrichtung durch die Formdüse (20) befördert;
einen Führungsstift (30), der entlang einer Mittelachse des zusammenlaufenden Durchgangs (22) angeordnet ist, wobei der Führungsstift (30) einen länglichen Körper umfasst, der in Transportrichtung verjüngt ist, wobei der Führungsstift (30) ferner eine Erregungsvorrichtung umfasst, wobei die Erregungsvorrichtung vorzugsweise ein Schwingungserzeuger ist, der schwingend mit dem Führungsstift (30) verbunden ist, wobei die Erregungsvorrichtung weiter bevorzugt ein Motor ist, der nicht drehbar mit dem Führungsstift (30) verbunden ist, wobei die Erregungsvorrichtung noch weiter bevorzugt ein pneumatisches Selbstausrichtungssystem ist; und
eine Spule (40), die der Formdüse (20) nachgelagert angeordnet ist, wobei die Spule (40) einen ersten Durchgang (42), durch den das faserige Bündelmaterial befördert wird, mindestens einen zweiten inneren Hohlraum (44), der mit einer zweiten Arbeitsfluidquelle (72) in Fluidverbindung steht, und mehrere zweite Bohrungen (46), welche den mindestens einen zweiten inneren Hohlraum (44) mit dem ersten Durchgang (42) fluidisch verbinden, umfasst, wobei die mehreren zweiten Bohrungen (46) derart positioniert sind, dass beim Durchlaufen der mehreren zweiten Bohrungen (46) das zweite Arbeitsfluid das faserige Bündelmaterial durchtränkt.

2. Vorrichtung nach Anspruch 1, wobei der Führungsstift (30) an einer Verschiebungsvorrichtung montiert ist, welche den Führungsstift (30) in Bezug zur Formdüse (20) axial versetzt.

3. Vorrichtung nach Anspruch 1, wobei der Führungsstift (30) ferner ein Schraubgewinde umfasst.

4. Vorrichtung nach Anspruch 1, wobei der Führungsstift (30) ferner mindestens einen dritten inneren Hohlraum (352), der mit einer dritten Arbeitsfluidquelle (354) in Fluidverbindung steht, und mehrere dritte Bohrungen (356), die den mindestens einen dritten inneren Hohlraum (352) mit dem Äußeren des Führungsstifts (30) fluidisch verbinden, umfasst.

5. Vorrichtung nach Anspruch 1, ferner umfassend mindestens ein Heizelement (60), das an einen Strom aus faserigem Bündelmaterial angrenzend angeordnet ist.

6. Vorrichtung nach Anspruch 1, ferner umfassend mindestens eine Kühlstation (50), die der Spule (40) nachgelagert angeordnet ist, umfassend einen zweiten Durchgang (52), durch welchen das faserige Bündelmaterial befördert wird, und mindestens einen vierten inneren Durchgang (54), der zumindest mit einer vierten Arbeitsfluidquelle (73-75) in Fluidverbindung steht und durch den das vierte Arbeitsfluid verläuft, um das faserige Bündelmaterial abzukühlen.

7. Vorrichtung nach Anspruch 7, wobei die mindestens eine Kühlstation (50) ferner mehrere vierte Bohrungen (56) umfasst, welche den mindestens einen vierten inneren Durchgang (54) und den zweiten Durchgang (52) derart miteinander fluidisch verbinden, dass das vierte Arbeitsfluid auf das faserige Bündelmaterial prallt.

8. Vorrichtung nach Anspruch 1, wobei das erste Arbeitsfluid und das zweite Arbeitsfluid gleich sind.

9. Vorrichtung nach Anspruch 4, wobei das erste Arbeitsfluid, das zweite Arbeitsfluid und/oder das dritte Arbeitsfluid gleich dem ersten Arbeitsfluid, dem zweiten Arbeitsfluid und/oder dem dritten Arbeitsfluid ist.

10. Vorrichtung nach Anspruch 7, wobei das erste Arbeitsfluid, das zweite Arbeitsfluid und/oder das vierte Arbeitsfluid gleich dem ersten Arbeitsfluid, dem zweiten Arbeitsfluid und/oder dem vierten Arbeitsfluid ist.

11. Verfahren zur Herstellung eines Rauchfilters, Folgendes umfassend:
Strömen eines ersten Arbeitsfluids durch eine ansaugende Formdüse (20), um ein faseriges Bündelmaterial durch die Formdüse (20) und über einen Führungsstift (30), der in Bezug zur Formdüse (20) mittig angeordnet ist, zu befördern, wobei der Führungsstift (30) ferner eine Erregungsvorrichtung umfasst, wobei die Erregungsvorrichtung vorzugsweise ein Schwingungserzeuger ist, der schwingend mit dem Führungsstift (30) verbunden ist, wobei die Erregungsvorrichtung weiter bevorzugt ein Motor ist, der nicht drehbar mit dem Führungsstift (30) verbunden ist, wobei die Erregungsvorrichtung noch weiter bevorzugt ein pneumatisches Selbstausrichtungssystem ist; und
Strömen eines zweiten Arbeitsfluids durch eine ansaugende Spule (40), um das faserige Bündelmaterial mit dem zweiten Arbeitsfluid zu durchtränken, während das faserige Bündelmaterial durch die Spule (40) befördert wird.

12. Verfahren nach Anspruch 11, wobei der Führungsstift (30) derart mechanisch betätigt wird, dass der Führungsstift (30) mindestens einem der folgenden Vorgänge ausgesetzt ist:
einer pendelnden Verschiebung entlang einer ersten Mittelachse der Formdüse (20);
einer Schwingung;
einer Drehung um eine zweite Mittelachse des Führungsstifts (30);
einer Ausrichtung in Bezug zur ersten Mittelachse der Formdüse (20).

13. Verfahren nach Anspruch 11, wobei der Führungsstift (30) derart angesaugt wird, dass ein drittes Arbeitsfluid durch den Führungsstift (30) und in einen Weg, durch den das faserige Bündelmaterial verläuft, geströmt wird.

14. Verfahren nach Anspruch 11, ferner umfassend Strömen eines vierten Arbeitsfluids durch mindestens eine Kühlstation (50), um das faserige Bündelmaterial zu kühlen, während das faserige Bündelmaterial durch die Kühlstation (50) befördert wird.

15. Verfahren nach Anspruch 11, ferner umfassend Verlaufen des faseriges Bündelmaterial durch ein Heizelement (60).

## Revendications

1. Appareil de formation d'un filtre à fumée comprenant :
une buse de formation (20) à travers laquelle passe un matériau fibreux en faisceau, la buse de formation (20) comprenant un passage convergent (22), au moins une première cavité intérieure (28) en liaison fluidique avec une première source de fluide de travail (71), et une pluralité de premiers trous (26) assurant une liaison fluidique de l'au moins une première cavité intérieure (28) avec une surface de travail (24) de la buse de formation (20), la pluralité de premiers trous (26) étant, en outre, placés et orientés de telle sorte que, lors de son passage à travers la pluralité de premiers trous (26), le premier fluide de travail achemine le matériau fibreux en faisceau à travers la buse de formation (20) dans une direction de transport ;
une broche de guidage (30) disposée le long d'un axe central du passage convergent (22), la broche de guidage (30) comprenant un corps allongé qui s'effile dans la direction de transport, la broche de guidage (30) comprenant, en outre, un dispositif d'excitation, le dispositif d'excitation étant, de préférence, un générateur de vibrations en liaison vibratoire avec la broche de guidage (30), le dispositif d'excitation étant, plus préférablement, un moteur en raccordement non rotationnel avec la broche de guidage (30), le dispositif d'excitation étant, encore plus préférablement, un système pneumatique d'auto-alignement ; et
un tambour (40) disposé en aval de la buse de formation (20), le tambour (40) comprenant un premier passage (42) à travers lequel le matériau fibreux en faisceau est acheminé, au moins une deuxième cavité intérieure (44) en liaison fluidique avec une deuxième source de fluide de travail (72), et une pluralité de deuxièmes trous (46) assurant une liaison fluidique de l'au moins une deuxième cavité intérieure (44) avec le premier passage (42), la pluralité de deuxièmes trous (46) étant placés de telle sorte que, lors de son passage à travers la pluralité de deuxièmes trous (46), le deuxième fluide de travail imprègne le matériau fibreux en faisceau.

2. Appareil selon la revendication 1, dans lequel la broche de guidage (30) est installée sur un dispositif de déplacement par translation qui déplace la broche de guidage (30) axialement par rapport à la buse de formation (20).

3. Appareil selon la revendication 1, dans lequel la broche de guidage (30) comprend, en outre, un filetage.

4. Appareil selon la revendication 1, dans lequel la broche de guidage (30) comprend, en outre, au moins une troisième cavité intérieure (352) en liaison fluidique avec une troisième source de fluide de travail (354) et une pluralité de troisièmes trous (356) assurant une liaison fluidique entre l'au moins une troisième cavité intérieure (352) et l'extérieur de la broche de guidage (30) .

5. Appareil selon la revendication 1, comprenant, en outre, au moins un élément de chauffage (60) disposé près d'un flux du matériau fibreux en faisceau.

6. Appareil selon la revendication 1, comprenant, en outre, au moins un poste de refroidissement (50) disposé en aval du tambour (40), comprenant un deuxième passage (52) à travers lequel le matériau fibreux en faisceau est acheminé et au moins un quatrième passage intérieur (54) ayant au moins une liaison fluidique avec une quatrième source de fluide de travail (73 à 75) et à travers lequel on fait passer le quatrième fluide de travail de façon à refroidir le matériau fibreux en faisceau.

7. Appareil selon la revendication 7, dans lequel l'au moins un poste de refroidissement (50) comprend, en outre, une pluralité de quatrièmes trous (56) assurant une liaison fluidique entre l'au moins un quatrième passage intérieur (54) et le deuxième passage (52) de telle sorte que le quatrième fluide de travail heurte le matériau fibreux en faisceau.

8. Appareil selon la revendication 1, dans lequel le premier fluide de travail et le deuxième fluide de travail sont identiques.

9. Appareil selon la revendication 4, dans lequel au moins un du premier fluide de travail, du deuxième fluide de travail et du troisième fluide de travail est identique à au moins un du premier fluide de travail, du deuxième fluide de travail et du troisième fluide de travail.

10. Appareil selon la revendication 7, dans lequel au moins un du premier fluide de travail, du deuxième fluide de travail et du quatrième fluide de travail est identique à au moins un du premier fluide de travail, du deuxième fluide de travail et du quatrième fluide de travail.

11. Procédé de formation d'un filtre à fumée comprenant :
faire en sorte qu'un premier fluide de travail s'écoule à travers une buse de formation (20) à aspiration de façon à acheminer un matériau fibreux en faisceau à travers la buse de formation (20) et sur une broche de guidage (30) située centralement par rapport à la buse de formation (20), la broche de guidage (30) comprenant, en outre, un dispositif d'excitation, le dispositif d'excitation étant, de préférence, un générateur de vibrations en liaison vibratoire avec la broche de guidage (30), le dispositif d'excitation étant, plus préférablement, un moteur en raccordement non rotationnel avec la broche de guidage (30), le dispositif d'excitation étant, encore plus préférablement, un système pneumatique d'auto-alignement ; et
faire en sorte qu'un deuxième fluide de travail s'écoule à travers un tambour (40) à aspiration de façon à imprégner le matériau fibreux en faisceau avec le deuxième fluide de travail tandis que le matériau fibreux en faisceau est acheminé à travers le tambour (40).

12. Procédé selon la revendication 11, dans lequel la broche de guidage (30) est actionnée mécaniquement de telle sorte que la broche de guidage (30) soit soumise à au moins une action parmi :
un déplacement alternatif par translation le long d'un premier axe central de la buse de formation (20) ;
une vibration ;
une rotation autour d'un second axe central de la broche de guidage (30) ;
un alignement par rapport au premier axe central de la buse de formation (20).

13. Procédé selon la revendication 11, dans lequel une aspiration est mise en œuvre dans la broche de guidage (30) de sorte qu'un troisième fluide de travail est amené à s'écouler à travers la broche de guidage (30) et dans un chemin parcouru par le matériau fibreux en faisceau.

14. Procédé selon la revendication 11, comprenant, en outre, le fait de faire en sorte qu'un quatrième fluide de travail s'écoule à travers au moins un poste de refroidissement (50) de façon à refroidir le matériau fibreux en faisceau tandis que le matériau fibreux en faisceau est acheminé à travers le poste de refroidissement (50).

15. Procédé selon la revendication 11, comprenant, en outre, le fait de faire passer le matériau fibreux en faisceau à travers un élément de chauffage (60).
